# EUROPEAN PATENT APPLICATION

(11) **EP 1 058 469 A1**
(43) Date of publication of application: **06.12.2000**
(21) Application number: 99304283.7
(22) Date of filing: 02.06.1999
(51) Int. Cl.: H04Q 7/32

(54) **Method for modifying information stored in a terminal of a cellular radio communication system**

(71) Applicant: LUCENT TECHNOLOGIES INC., Murray Hill, New Jersey 07974-0636 (US)
(72) Inventor: Carpentier, Paul Marcus, Twickenham, TW1 3HY (GB); Pike, Simon Everett, Wootton Bassett, SN4 7ES (GB)
(74) Representative: Williams, David John

(57) **Abstract**

A mobile unit is provided with a default list of frequencies and associated information. Information is downloaded to the unit to modify the list, by adding or deleting entries, identifying entries which are not used and assigning priorities to entries.

## Description

### Field of the Invention

This invention relates to cellular radio communications systems. In particular, it relates to a method of defining frequencies for use in a cellular radio communications system.

Cellular networks use a number of radio frequencies. Typically, more than one frequency is used in a single cell or coverage area, and different sets of frequencies are used in different cells. The frequencies are reused in a repeat pattern, which is typically regular.

A terminal (mobile station) wishing to use the network has to know what set of frequencies to search in order to find the frequency for use in the coverage area in which it is currently located. It is also necessary for the system itself to be able to signal to the terminal whatever new frequency it is to use as it moves between coverage areas, and these are known as handover messages.

### Background to the Invention

In presently used systems, details of every frequency which a terminal (mobile station) may need to use are pre-stored in the terminal and once fixed, cannot be changed. Furthermore, details of the strategy which the terminal is to use in order to scan or search through the frequencies to find one for use, or for handover, are also pre-stored and cannot be changed. Thus, when a terminal is required to change frequencies, i.e. moving between cells or moving out of the coverage of one network operator to another, the terminal goes through a fixed scanning/searching routine through its list of predetermined frequencies, in order to search for a viable signal or frequency. This can take a relatively long period of time and is also wasteful in terms of battery usage, because of the time that the receiver in the terminal must be active.

With the previously proposed technologies, a fixed frequency raster is used. This, however, cannot be extended once the terminal has been manufactured and when the terminal needs to search for a network, it must search all of the frequencies programmed into the terminal. In practice, some of the frequencies may never carry a suitable signal so any time spent searching these will always be wasted.

One example of present second generation cellular radio technology is GSM. In GSM technology, the frequency raster and the bandwidth of the signal are the same (200 kHz). It is therefore possible for a terminal to identity frequencies on which there are signals by measuring the power of the received signal.

In the proposed third generation cellular system called UMTS, it is proposed to use Code Division Multiple Access (CDMA) with a channel bandwidth of about 4MHz, with a frequency raster of 200 KHz. This means that there may be many frequencies (in this case about 20) for which the terminal can measure received power, but only one of which is correct (i.e. for which the received signal can be decoded). The process of actually decoding a received signal takes longer than measuring the received power. Under present plans for UMTS systems, it is likely that there are frequencies in the raster which will never be used as the centre frequency of an RF channel, but since these will not be known until after networks have been deployed, and accordingly after some terminals have been manufactured, these frequencies must still be pre-stored in the terminal, even though they will never be used. Thus, a process based on a GSM method of identifying which frequencies are used in a current coverage area is highly inefficient. Proposals have been made to define a subset of the 200 KHz frequency raster, to reduce the number of frequencies which must be searched. However, this would still be pre-stored in the terminal, and may exclude some frequencies which it may be desirable to use in some circumstances.

Systems will also have to take account that wide area coverage, when UMTS is first deployed, will be provided by current systems such as GSM. It will therefore be necessary for terminals to handover between GSM and UMTS and thus terminals will be required to monitor frequencies of each system operating in different frequency bands. This can exacerbate the burden on existing searching strategies and predetermined frequency lists.

### Summary of the Invention

According to the present invention there is provided a method of defining frequencies for use in a cellular radio communications system comprising dynamically modifying information stored within a terminal relating to the list of frequencies used by the terminal.

The information which is modified may have been pre-stored in the terminal during manufacture, or previously input to the terminal, or pre-stored in the terminal and previously modified, e.g. in a like manner.

The data may be input to the terminal either directly or via information stored in a removable module such as a SIM (Subscriber Identification Module) card. Alternatively, and equally preferred, the data may be downloaded by messages sent over the radio interface to the terminal.

The modified data may comprise additions to the set of frequencies which a terminal is arranged to search through. Alternatively or additionally, data may be downloaded or otherwise transferred to the terminal which prevents the unit from monitoring certain frequencies. Alternatively or additionally, the data may allocate different priority levels to different frequencies, frequency bands and so on.

In one example of different priority levels, a first set of priority data comprises the list of frequencies which are to be used on the home network of the cellular network operator the terminal is normally used with. A second priority may include frequency details relating to the cellular network operators with which the first network operator has preferred roaming arrangements. A third priority level may include a complete list of frequencies available which are used by a cellular network operator, which can be searched manually by the user when desired. A fourth "null" priority level may indicate frequencies which are never used and which therefore need not be monitored in any frequency search. More or less than four priority levels may be set.

A terminal used with embodiments of the invention may generally be provided with a default list of frequencies and associated information. The invention provides a method of modifying this list by, for example, adding entries to the list, identifying entries which are not used, and assigning priorities to entries.

The modified data may be intended to 'permanently' overwrite or modify the default list (at least until a new list is downloaded) or may be a temporary list which takes precedence over the default list. This may be sent to the phone when it first registers with a network, and could expire when the terminal registers with a different network.

### Brief Description of the Drawings

Embodiments of the present invention will now be described, by way of example only, with reference to the accompanying drawings in which:
Figure 1 shows schematically a data download path from a network to a terminal;
Figure 2 shows schematically a mobile unit receiving data from a SIM;
Figure 3 shows an example of message content and format; and
Figure 4 shows another example of message content and format, in which information relating to a block of frequencies is contained in a single message.

### Description of Preferred Embodiments

In embodiments of the present invention, methods are provided for allowing a list of frequencies used by a terminal to be modified, either by information stored in a SIM card or by messages downloaded over the radio interface. The information in a SIM may be modified by information downloaded over a radio interface.

Normally, a default list of frequencies is programmed into the terminal during manufacture. This enables regulatory requirements to be met, such as the requirement for a terminal to be able to make an emergency call with the SIM removed. In such cases, the invention provides a method of modifying this list.

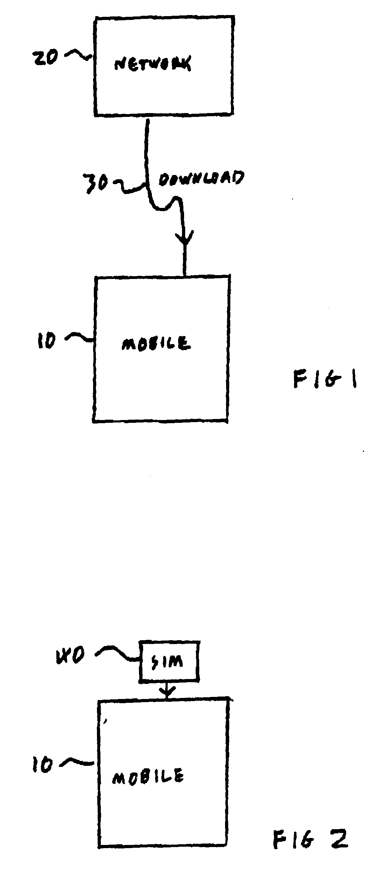

Figure 1 shows how frequency data may be downloaded direct to a terminal 10 from a network 20 over the radio interface 30. Figure 2 shows how a frequency list in a terminal 10 may be revised or modified from data stored in a SIM 40. Methods for downloading data per se, or for reading data from SIMs are well known in themselves and will not be discussed further.

In embodiments where the terminal receives messages from a cellular network, this information may be sent, for example by being broadcast by the network to all terminals on the network, or may be sent to individual phones using a dedicated communication channel. The former method is simpler, whilst the second allows the network to confirm that the information has been received by each individual terminal. The use of a dedicated channel enables specific terminals to be updated. This could, for example, allow voice-only terminals to be restricted to designated frequency bands.

When a SIM is present and the terminal is first turned on, the terminal may be updated with any information stored in the SIM. Thus, the SIM could be programmed with the most current frequency information when it is supplied to a subscriber. The data in the SIM may, for example, add extra frequencies to the default list of frequencies, or raster of frequencies, stored in the phone for searching or scanning, or frequencies which are already stored in the phone and which are not to be used could be removed, or marked in a way that they are not to be scanned as part of a search strategy.

The frequencies which are either downloaded or modified from a SIM may be assigned priorities. The frequencies with first priority are those which are searched first and these may be those frequencies where it is most likely to find a valid signal, for example the frequencies forming part of a home network. Other types of frequency of different priorities may also be allocated. This mechanism may also be used to remove frequencies from the list by assigning a priority of "never". This may be achieved by setting a flag against that frequency which means that that frequency is always skipped during a scanning procedure.

It is also possible to include fields that identify characteristics of a system. One possibility is whether the system is a TDD (Time Division Duplex) or FDD (Frequency Division Duplex) system, and also to signal separate transmit and receive frequencies if the separation is not the default value. In FDD systems, uplink and downlink frequencies will normally be separated by a default value, and there is then no need to send separate information for both frequencies. However, these may be networks in which a different separation is used, and so both of these frequencies will need to be included separately in messages. This potentially allows suitable terminals to operate in these networks without requiring this frequency separation to have been programmed during manufacture.

In further modifications of the invention, it is possible to transmit information about more than one cellular standard. In such a case, a separate field is added to a message containing a number which identifies the standard and its associated frequency plan. This separate field need only be used when the information in a message relates to a different standard from the default one (e.g. the standard actually used to download the information). A flag bit may be added to signal this.

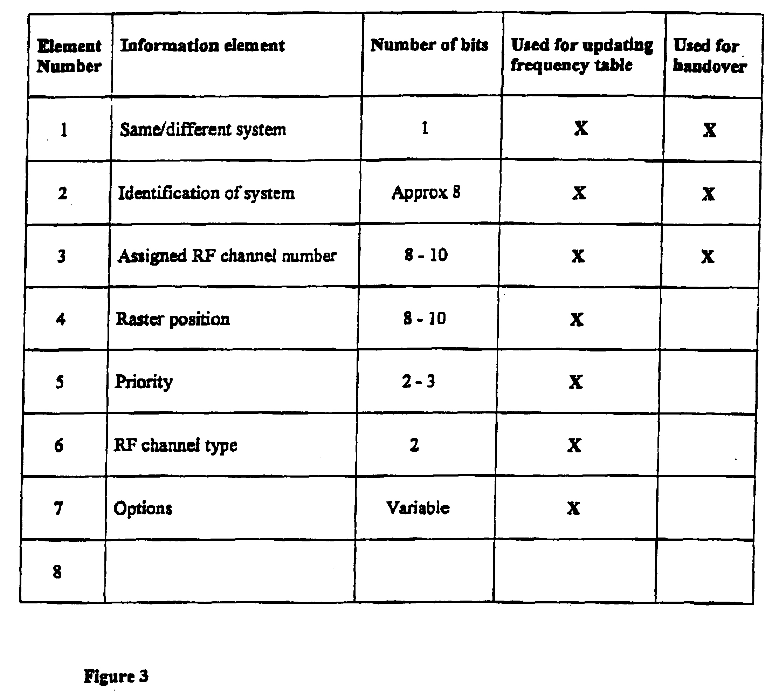

One example of message content and format is shown in Figure 3. Note that this Figure is an example only and is not exclusive.

A first element (field) I provides information as to whether the frequency data to be transmitted relates to the same system as that which is being used for the frequency download, or to a different system. This may be achieved by a single bit. For example, a 0 may be sent if the message relates to the same system and a 1 may be sent if the message relates to a different system.

A second element is used for identification of the system. In one example, this may comprise approximately 8 bits and this information is only sent if the content of the previous element is 1, i.e. the data relates to a frequency of a different system from that being used from the present download.

Element number 3 refers to the assigned RF channel number of the channel frequency to be sent. This refers to one particular frequency and represents the number of the row in a table of RF channels which arc defined for use.

Element number 4 relates to the raster position of the channel and is again preferably between 8 and 10 bits in one embodiment. Note that whereas the first three elements can be used for updating the frequency table and also for handover between different systems, the subsequent elements are generally just used for updating a frequency table and not for handover purposes. The element 4, representative of raster position, relates to the complete set of possible channels. Typically, for UMTS, a raster of 200 kHz is used. The number of bits provided for element 4 will generally be greater than or equal to the previous field, element 3.

Element 5 is a field relating to the priority to be assigned to a channel, as outlined previously. This may typically utilise 2 to 3 bits and this assigns a priority for searching assigned channel numbers when searching for a network. As discussed, one of these priorities might be to indicate "null" against a channel.

Element number 6 refers to the type of RF channel about which data is being transmitted and is typically of 2 bits. For example, a value of 0 might indicate that the channel is of FDD type, a value of 1 might indicate that the channel is of TDD type. A value of 2 may indicate that this channel is to be used for downlinks only and a value of 3 may indicate that this channel is to be used for uplinks only. As stated, in frequency division duplexing, different channels are used for the uplink and downlink elements of communication, and where the separation between the uplink and downlink channels differs from a default value, it is necessary to provide separate identification of each of them.

Element number 7 may relate to various options relating to a channel and the number of bits assigned to this may be variable depending upon the nature and type of options available. This element is only used to identify options needed to decode the broadcast control channel. One possible option for this is chip rate.

The system shown schematically in Figure 3 sends a single message relating to each channel. While such a system is perfectly workable, in some cases, it may be preferable to send a message which relates to an entire block of entries, the block not necessarily having to contain contiguous entries (or a plurality of entries) with one transmission. In such a case, an element of the message sent could include a flag which indicates whether the following message relates to a single channel only, as in Figure 3, or whether it relates to a block of channels, and the block of channels or group of channels (which need not necessarily be contiguous) can then be identified in the message. This can save download time.

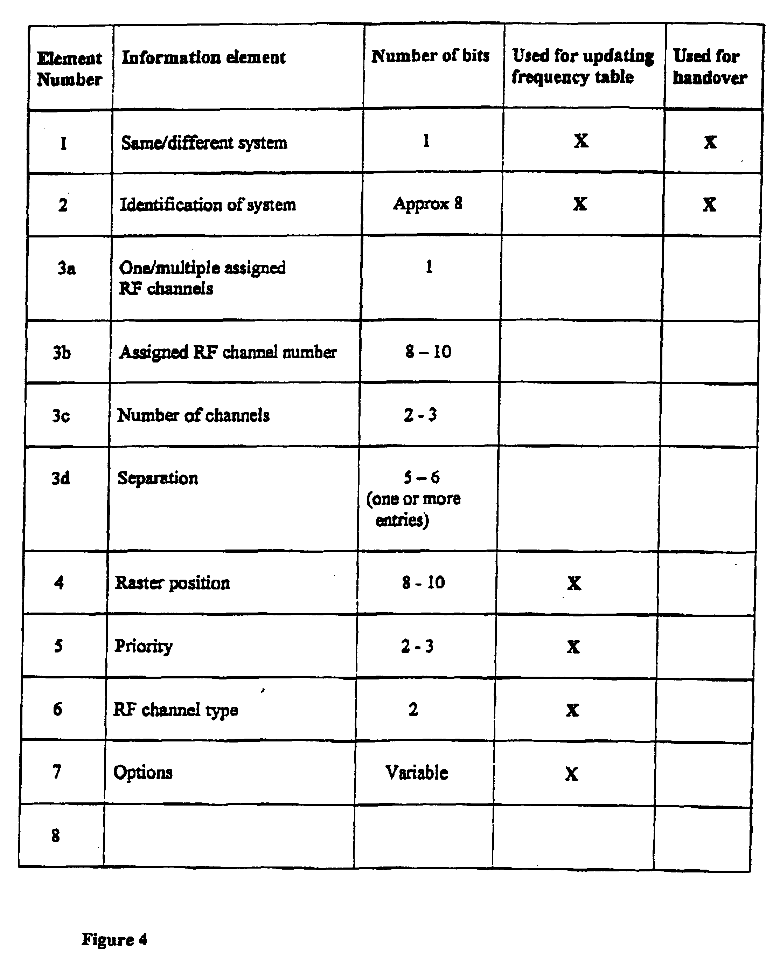

An example of message content and format relating to a block of frequencies is shown in Figure 4. Note that this Figure, like Figure 3, is an example only and is not exclusive. This example is similar to that shown in Figure 3, except that element 3 is replaced by four elements 3a) 3b) and 3c) and 3d).

Element (field) 3a) provides information as to whether the frequency data to be transmitted relates to a single frequency or a block of frequencies. This may be achieved by a single bit. For example, a 0 may be sent if the message relates to a single frequency and a 1 may be sent if the message relates to a block of frequencies.

Element 3b) refers to the assigned RF channel number. If element 3a) is 0, this is the assigned RF channel number of the channel frequency to be sent This refers to one particular frequency and represents the number of the row in a table ofRF channels which are defined for use. If element 3a) is 1, this is the assigned RF channel number of the first frequency in the block.

Element 3c) refers to the number of assigned RF channel numbers within the block

Element 3d) refers to the spacing of the channel frequencies of the RF channels within the block, in terms of steps in the raster position. If the channel frequencies are separated by an equal number of raster positions, then this element could contain a single number. If the separations are not equal, then this element could contain a number corresponding to each separation (i.e. one less than the number of assigned RF channel numbers within the block).

If the message relates to the addition of new assigned RF channel numbers, the channel frequencies could be assigned sequentially, starting from the first frequency in the block. If the message relates to raster positions which have already been given assigned RF channel numbers, these assigned RF channel numbers would typically be retained.

The present invention enables future changes in network frequencies to be accommodated, without requiring a terminal to search over frequencies which will never be used, and encompasses transmitting information regarding different cellular systems to facilitate ease of roaming and handover between different systems.

## Claims

1. A method of defining frequencies for use in a cellular radio communications system comprising dynamically transmitting to a terminal information relating to the list of frequencies used by the terminal.

2. A method as claimed in Claim 1, wherein the terminal is initially provided with a default frequency list, wherein the default list is modified by information transmitted to the terminal.

3. A method as claimed in Claim 1 or Claim 2, wherein the information is downloaded to the terminal by a radio link.

4. A method as claimed in any preceding claim, wherein the information is provided on a removable module and is transmitted from the removable module to the terminal.

5. A method as claimed in Claim 4, wherein information in the removable module is modified by information downloaded to the terminal by a radio link.

6. A method as claimed in any preceding claim, wherein the information comprises a list of frequencies.

7. A method as claimed in any preceding claim, wherein the information includes data pertaining to priority levels of frequencies.

8. A method as claimed in Claim 6, wherein one or more frequencies are assigned a priority level such that the terminal never monitors those frequencies.

9. A method as claimed in any preceding claim, wherein the frequency information includes an uplink and downlink frequency.

10. A method as claimed in Claim 9, wherein the uplink and downlink frequencies are in a predetermined relationship.

11. A method as claimed in any preceding claim, wherein the information includes data pertaining to the type of signal or system relating to a frequency.

12. A method as claimed in any preceding claim, wherein data relating to individual frequencies is transmitted sequentially.

13. A method as claimed in any of Claims 1 to 11, wherein information relating to a block or group of frequencies is transmitted as a single message.

14. A method as claimed in any preceding claim, wherein the information is provided in a series of fields.

15. A method as claimed in Claim 14, wherein the information includes any one or more of the group of fields comprising:
data as to whether a frequency relates to the same system as that on which the fields are being transmitted, or a different one;
data identifying said different system;
data relating to an assigned RF channel number of the frequency;
data relating to a raster position of the frequency;
data relating to a priority level to be assigned to the frequency;
data relating to the type of channel to which the frequency relates; and
data relating to predetermined options assigned to the frequency channel;
wherein each of the fields comprises a predetermined number of bits of data.

16. A method as claimed in Claim 14 or 15, including a field determining whether the data relates to a single frequency or to a group or block of frequencies.

17. A method as claimed in Claim 16, including a field determining the number of frequencies about which the data relates to.

18. A method as claimed in any of Claims 14 to 17, wherein one or more fields are included which provide information as to whether a frequency is to be used for uplink- or downlink- only.

19. A method as claimed in Claim 2, wherein the information transmitted is used to temporarily modify the default list.
